# FASCICULE DE BREVET EUROPEEN

(11) **EP 3 131 812 B1**
(45) Date de publication et mention de la délivrance du brevet: **31.01.2018**
(21) Numéro de dépôt: 15716074.8
(22) Date de dépôt: 17.04.2015
(51) Int. Cl.: B64C 25/00, B64D 47/08

(54) **ATTERRISSEUR POUR UN AERONEF COMPRENANT UN DETECTEUR D'OBSTACLES**
FAHRWERK MIT EINEM HINDERNISDETEKTOR FÜR EIN FLUGZEUG
LANDING GEAR FOR AN AIRCRAFT, COMPRISING AN OBSTACLE DETECTOR

(30) Priorité: 17.04.2014 FR 1453517
(43) Date de publication de la demande: 22.02.2017
(73) Titulaire: Safran Electronics & Defense, 92100 Boulogne-Billancourt (FR); Safran Landing Systems, 78140 Vélizy-Villacoublay (FR)
(72) Inventeur: NECCI, Carlo, F-78140 Velizy Villacoublay (FR); LACOURIE, Jacques, F-92100 Boulogne-Billancourt (FR)
(74) Mandataire: Regimbeau
(86) Numéro de dépôt international: PCT/EP2015/058386
(87) Numéro de publication internationale: WO 2015/158894

(56) Documents cités:
- EP-A1- 2 708 464
- WO-A1-2010/003911
- WO-A1-2012/131105
- US-A1- 2003 048 357
- US-B1- 8 042 765

## Description

### DOMAINE DE L'INVENTION

L'invention concerne le domaine général de la détection d'obstacles autour d'un aéronef.

### ARRIERE-PLAN TECHNOLOGIQUE

De nos jours, la principale cause d'accidents dans un aéroport sur les voies de circulations et au niveau des portes d'embarquement ont lieu durant les opérations au sol des aéronefs. Ces accidents sont généralement dus à la collision de l'aéronef avec des obstacles présents autour de celui-ci durant ses manoeuvres, en particulier lors des manoeuvres arrière. En effet, les pilotes n'ont aucune visibilité dans les zones situées sous et derrière leur aéronef.

La présence de tels obstacles est dangereuse pour le personnel au sol, pour l'aéronef ainsi que pour les passagers. De plus, les accidents résultant de la collision d'un aéronef avec des obstacles ont pour conséquence de réduire l'opérabilité de l'aéroport, entrainant ainsi un impact sur l'aéroport et les compagnies aériennes concernées. Le Document EP2708464A1 décrit toutes les caractéristiques du préambule de la revendication 1. Afin d'éviter des collisions entre un aéronef et des obstacles présents au sol, il est connu d'accompagner l'aéronef durant toute sa phase au sol (remorquage, taxi, etc.), à l'aide d'un personnel dédié. Ce personnel, spécialement formé pour ce type de mission, guide l'aéronef au sol en anticipant la présence des obstacles. Toutefois, le guidage, l'anticipation et la capacité à identifier des obstacles potentiellement gênants sur la piste sont limités par le fait que le personnel est humain et peut par conséquent faire des erreurs, être momentanément déconcentré, ou encore avoir une visibilité réduite en raison des conditions météorologiques. Par ailleurs, un être humain ne peut physiquement pas surveiller un champ de vision 360° autour de l'avion.

Ce travail d'accompagnement est en outre dangereux, fatigant et stressant pour le personnel au sol, qui en plus des obstacles présents au sol doit anticiper le mouvement des véhicules et des autres aéronefs présents au sol.

### RESUME DE L'INVENTION

Un objectif de l'invention est donc de proposer un nouveau moyen permettant de détecter des obstacles durant les opérations au sol des aéronefs et de répondre au besoin de perception arrière et sous l'aéronef, notamment lors des manoeuvres arrière, qui soit plus efficace que les techniques conventionnelles, quelles que soient les conditions de visibilité au sol, et qui soit en outre automatique et indépendant des réflexes humains.

Pour cela, l'invention propose un atterrisseur d'un aéronef, comprenant :
- un caisson, présentant une direction principale s'étendant selon un axe longitudinal, ledit caisson comprenant une première extrémité configurée pour être montée sur l'aéronef et une deuxième extrémité opposée à la première extrémité,
- une tige, montée à coulissement sur la deuxième extrémité du caisson, ladite tige étant mobile en translation par rapport au caisson le long de l'axe longitudinal,
- au moins un détecteur d'obstacle, fixé sur l'atterrisseur dans une zone adjacente à la deuxième extrémité du caisson.

Certains aspects préférés mais non limitatifs de l'atterrisseur décrit ci-dessus sont les suivants :
- le détecteur d'obstacle est fixé sur le caisson,
- l'atterrisseur comprend en outre une contrefiche, ladite contrefiche comprenant une première extrémité configurée pour être montée sur l'aéronef et une deuxième extrémité configurée pour être connectée au caisson dans une zone adjacente à la deuxième extrémité dudit caisson, et dans lequel le détecteur d'obstacle est fixé dans une zone adjacente à la contrefiche,

- le détecteur est fixé sur le caisson, entre la deuxième extrémité de la contrefiche et la première extrémité du caisson,
- le détecteur d'obstacle est fixé de manière à être orienté vers une zone arrière de l'atterrisseur, ladite zone arrière étant destinée à être orientée vers une zone arrière d'un aéronef,
- le détecteur d'obstacle est fixé dans une zone latérale de l'atterrisseur, de préférence en partie interne de l'atterrisseur,
- l'atterrisseur comprend au moins deux détecteurs d'obstacle,
- les détecteurs d'obstacle sont fixés ensemble de manière à former une pièce monobloc,
- le détecteur d'obstacle comprend au moins un, de préférence au moins deux détecteurs d'obstacle choisis parmi le groupe suivant : détecteur de proximité infrarouge, détecteur de proximité hyperfréquence, détecteur de proximité ultrasons, une ou plusieurs caméras infrarouge ou visible, un télémètre à ultrasons, un télémètre radar ou un télémètre laser,
- l'atterrisseur comprend en outre un actionneur configuré pour mettre en rotation le détecteur d'obstacle autour de l'axe longitudinal du caisson,
- l'atterrisseur comprend en outre un faisceau de câblage configuré pour contrôler une transmission de la puissance dans l'atterrisseur, ledit faisceau de câblage étant fixé sur l'atterrisseur à l'aide d'anneaux de fixation élastiquement déformables, et dans lequel le détecteur d'obstacle comprend des câbles fixés à l'atterrisseur à l'aide des anneaux de fixation du faisceau de câblage,
- le détecteur d'obstacle comprend un champ de détection présentant une ouverture et une profondeur configurés pour couvrir une zone inférieure de l'aéronef et une zone arrière de l'aéronef,
- l'ouverture du champ de détection présente un angle de surveillance horizontale compris entre 0° et 180°, et la profondeur du champ de détection (F) est comprise entre environ 0 mètre et 250 mètres,
- l'atterrisseur comprend un atterrisseur principal ou un atterrisseur avant de l'aéronef, et
- l'atterrisseur est rétractable.

Selon un deuxième aspect, l'invention propose également un aéronef, comprenant un atterrisseur comme décrit ci-dessus.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

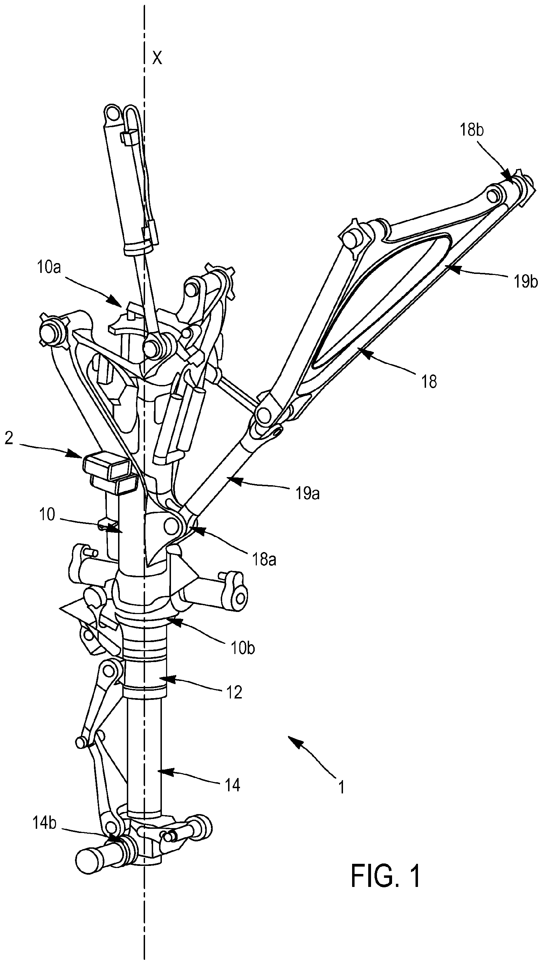

La figure 1 est une vue en perspective d'un exemple de réalisation d'un atterrisseur avant conforme à l'invention,

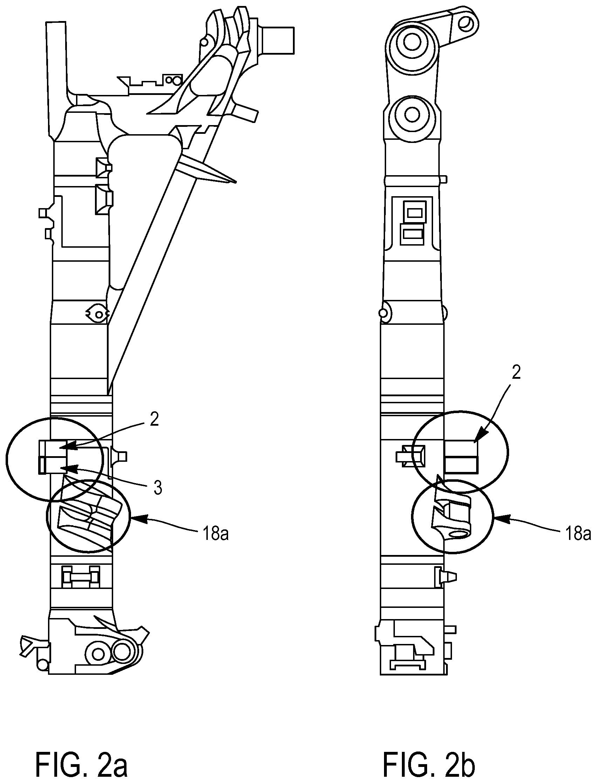

Les figures 2a et 2b sont des vues latérale et arrière respectivement du caisson et d'une partie de la contrefiche d'un exemple de réalisation d'un atterrisseur principal conforme à l'invention,

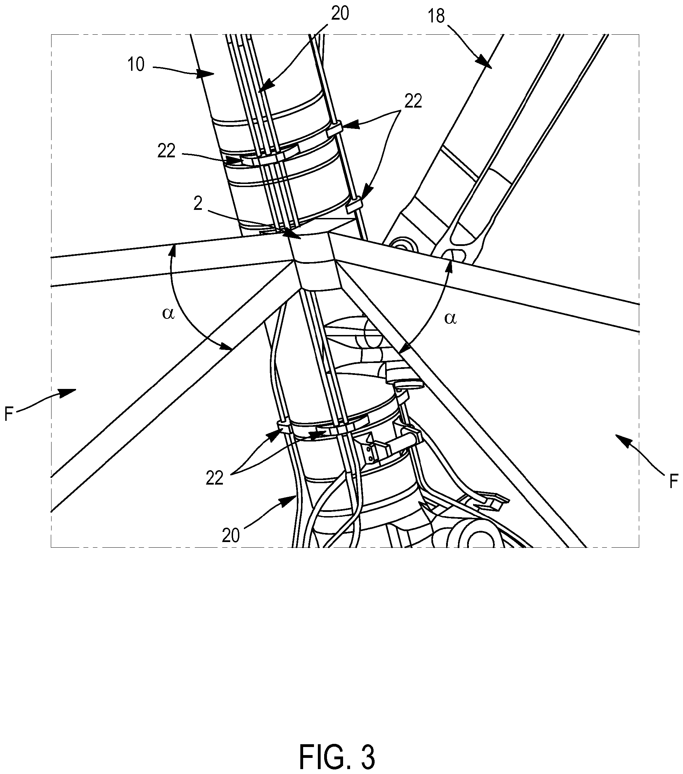

La figure 3 est une vue partielle de l'atterrisseur de la figure 2, sur laquelle sont visibles des anneaux de fixation du faisceau de câbles de l'atterrisseur,

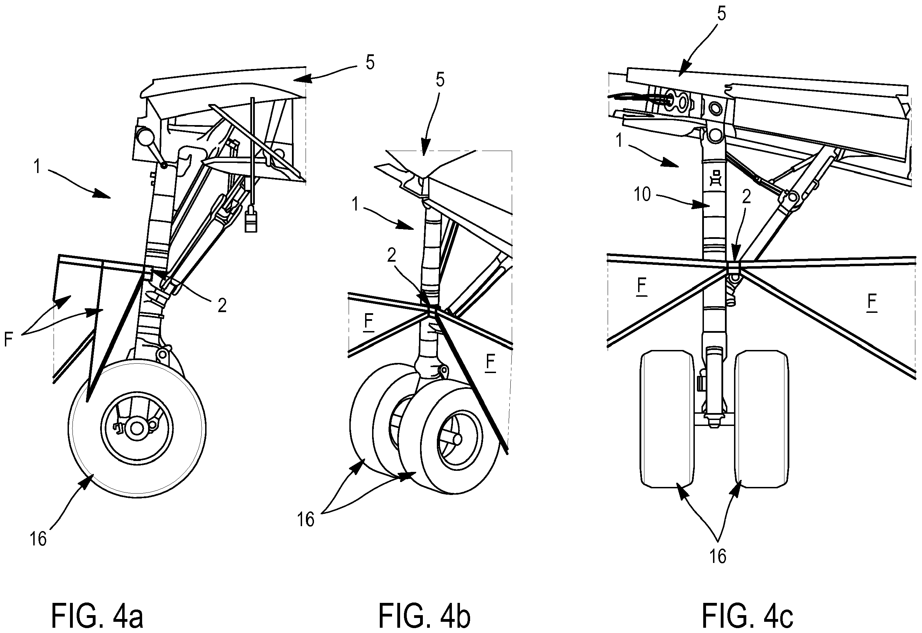

Les figures 4a, 4b et 4c sont respectivement des vues latérale, de trois-quarts et arrière du champ de détection du détecteur d'obstacle de l'atterrisseur de la figure 2, et
Les figures 5 et 6 illustrent des exemples de positionnement de détecteurs d'obstacle sur un exemple de réalisation d'un aéronef comprenant un atterrisseur avant et deux atterrisseurs principaux et des exemples de champs de détection associés.

### DESCRIPTION DETAILLEE D'UN MODE DE REALISATION

Afin de permettre une détection d'obstacles optimisée et de réduire les risques de collision d'un aéronef 5 durant les opérations au sol, l'invention propose de munir l'aéronef 5 de détecteurs d'obstacle 2 au niveau de son train d'atterrissage 1 (ou atterrisseur).

La structure physique d'un atterrisseur 1 peut en effet être utilisée comme support d'un ou plusieurs détecteurs d'obstacle 2 sur l'aéronef 5. Les obstacles ainsi détectés par le(s) détecteur(s) peuvent alors être utilisés comme valeurs d'entrée pour des unités de traitement dédiées, configurées pour analyser ces valeurs d'entrée et en déduire une trajectoire sure et optimisée lors du déplacement au sol de l'aéronef. Le cas échéant, les unités de traitement sont également configurées pour traiter les informations obtenues par les détecteurs d'obstacle et les optimiser (par exemple lorsque le détecteur 2 comprend une caméra vidéo, les images obtenues devant être traitées afin de tenir compte des différences de luminosité entre les zones à l'ombre et les zones exposées à la lumière).

L'atterrisseur 1 peut aussi bien comprendre un atterrisseur 1 principal (par exemple situé sous les ailes) ou encore d'un atterrisseur 1 auxiliaire (tel qu'un atterrisseur avant, situé au niveau du nez de l'aéronef).

Un atterrisseur 1 peut être fixe ou rétractable dans une case à atterrisseur 1 dédiée formée dans le fuselage ou dans les ailes de l'aéronef 5.

Dans ce qui suit, l'invention sera décrite plus particulièrement dans le cas d'un atterrisseur 1 rétractable, c'est-à-dire un atterrisseur 1 susceptible d'être rétracté entre la phase de décollage et la phase d'atterrissage dans une case d'atterrisseur 1 d'un aéronef 5. Ceci n'est cependant pas limitatif, dans la mesure où l'invention s'applique sans modification substantielle aux atterrisseurs 1 fixes, c'est-à-dire aux atterrisseurs 1 non rétractables et fixés à demeure sur la structure des aéronefs 5.

L'atterrisseur 1 comprend généralement, de manière connue en soi, un caisson 10, présentant une direction principale s'étendant selon un axe longitudinal X, qui constitue le corps principal de l'atterrisseur 1 et permet d'assurer la transmission des efforts principaux vers la structure de l'aéronef 5. Le caisson 10 comprend à cet effet une première extrémité 10a, montée sur la structure de l'aéronef 5, et une deuxième extrémité 10b, comportant une cavité non apparente dans laquelle est montée pivotante une partie basse constituée d'une embase 12 et d'une tige coulissante 14.

La tige coulissante 14 est mobile en translation par rapport au caisson 10 le long de l'axe longitudinal X et forme avec l'embase 12 un amortisseur adapté pour absorber l'énergie de l'impact de l'atterrissage et supporter les évolutions au sol de l'aéronef 5. L'embase 12 peut être montée dans la cavité de la deuxième extrémité 10b du caisson 10 de telle sorte que la tige coulissante 14 puisse pivoter sensiblement autour de l'axe longitudinal X du caisson 10.

L'extrémité 14b de la tige coulissante 14, qui est la plus éloignée de la deuxième extrémité 10b du caisson 10, supporte des moyens de déplacement 16, comme par exemple une roue constituée d'une jante

L'atterrisseur 1 comporte en outre une contrefiche 18, comprenant une première extrémité 18b configurée pour être montée sur l'aéronef 5 et une deuxième extrémité 18a configurée pour être connectée au caisson 10, à proximité de la deuxième extrémité 10b dudit caisson 10. La contrefiche 18 est configurée pour transmettre à la structure de l'aéronef 5 les efforts axiaux venant des moyens de déplacement 16.

La transmission de la puissance électrique dans l'atterrisseur 1 est réalisée à l'aide d'un faisceau de câblage 20 (harnais électrique), qui s'étend tout le long de l'atterrisseur 1, de la première extrémité 10a du caisson 10 à la tige coulissante 14. De manière connue en soi, le faisceau de câblage 20 peut être plaqué contre l'atterrisseur 1 à l'aide d'une série d'anneaux de fixation 22 élastiquement déformables, répartis le long de l'axe longitudinal X sur l'atterrisseur 1.

Dans le cas d'un atterrisseur 1 rétractable, comme illustré sur les figures, la première extrémité 10a du caisson 10 peut être montée pivotante autour d'un axe lié fixement à des paliers solidaires de la structure de l'aéronef 5, tandis que la contrefiche 18 peut être brisable, c'est-à-dire constituée de leviers 19a, 19b arc-boutés pouvant être montés à pivotement l'un sur l'autre afin de permettre la rétractation de l'atterrisseur 1.

La Demanderesse s'est aperçue qu'il était techniquement difficile de loger des capteurs tels que détecteurs d'obstacle 2 sur l'atterrisseur 1, dans la mesure où le champ de détection F de ces détecteurs d'obstacle 2 doit couvrir au moins la zone s'étendant sous l'aéronef 5 et la zone s'étendant à l'arrière de l'aéronef 5 (en direction de l'empennage et au-delà). De manière optionnelle, il peut également être intéressant que les détecteurs d'obstacle 2 soient capables de couvrir la zone avant (vers le nez) de l'aéronef 5, aussi bien que les zones latérales.

Par ailleurs, les performances des détecteurs d'obstacle 2 ne doivent pas être impactées par la vitesse de l'aéronef 5 ni les conditions météorologiques (pluie, poussière, neige et/ou pollution).

On notera en outre que la position, l'orientation et le choix des détecteurs d'obstacle 2 doit tenir compte de l'étendue de la zone que l'on souhaite surveiller, du champ de détection intrinsèque au détecteur d'obstacle choisi (ouverture et profondeur du champ), ainsi que de la sensibilité de chaque détecteur (à la luminosité notamment, qui est généralement plus sombre sous l'aéronef qu'autour de celui-ci, ce qui peut poser problème pour certains types de détecteurs).

Ces difficultés sont encore accrues lorsque l'atterrisseur 1 est rétractable. En effet, en configuration sortie de l'atterrisseur 1, les détecteurs d'obstacle 2 doivent être dirigés de manière à être capables de détecter des obstacles présents sous l'aéronef 5 et à l'arrière de celui-ci. Par ailleurs, en configuration rétractée, les détecteurs d'obstacle 2 doivent pouvoir être logés dans la case de l'aéronef 5, dont le volume est fortement limité. Enfin, il est nécessaire que le faisceau de câblage 20 suive la forme de l'atterrisseur 1 et la cinématique de son mécanisme d'actionnement.

Afin de répondre à l'ensemble des exigences citées ci-dessus, le détecteur d'obstacle 2 peut par exemple être fixé dans une zone adjacente à la deuxième extrémité 10b du caisson 10. Le détecteur d'obstacle 2 s'étend alors dans une partie inférieure de l'atterrisseur 1, à distance de la structure de l'aéronef 5, ce qui permet d'obtenir un large champ de détection F. En effet, en positionnant ainsi le détecteur d'obstacle 2, le champ de détection F du détecteur 2 n'est pas gêné par les trappes de la case de l'atterrisseur 1 ni par la structure (fuselage ou aile, selon la position du détecteur 2) de l'aéronef 5. Par ailleurs, le détecteur d'obstacle 2 étant à distance du sol, son champ de détection F n'est pas limité par la présence du sol et les risques qu'il entre en collision avec des objets présents sur le sol ou projeté lors du déplacement de l'aéronef 5 sont fortement réduits. Enfin, en configuration rétractée, le détecteur d'obstacle 2 ne risque pas d'être écrasé entre le caisson 10 rétracté et la zone de fixation du caisson 10 à l'aéronef.

Le cas échéant, le détecteur d'obstacle 2 peut être fixé sur un support 3, par exemple sur un support métallique. Le détecteur 2 est alors fixé sur l'atterrisseur 1 par l'intermédiaire de son support 3, par exemple à l'aide de pinces métalliques conventionnelles.

Dans une forme de réalisation, le détecteur d'obstacle 2 peut être fixé sur le caisson 10, à proximité de la contrefiche 18. Par exemple, le détecteur d'obstacle 2 peut être fixé entre la contrefiche 18 et la première extrémité 10a du caisson 10, à proximité de la deuxième extrémité 10b du caisson 10. Cette configuration permet en effet de loger aisément le détecteur d'obstacle 2 dans la case de l'atterrisseur 1, sans nécessiter d'aménagement spécifique, tout en garantissant un champ de détection optimal pour la détection des obstacles sur le sol.

Par ailleurs, cette configuration permet de connecter électriquement le détecteur d'obstacle 2 au faisceau de câblage 20 de l'atterrisseur 1, sans modifier substantiellement la configuration du faisceau de câblage 20. A cet effet, le support 3 du détecteur d'obstacle 2 peut notamment être rapporté sur l'atterrisseur 1 et maintenu en position à proximité des anneaux de fixation 22 déjà présents sur le faisceau de câblage 20. Etant donné que les anneaux de fixation 22 sont élastiquement déformables et que les câbles de connexion du détecteur d'obstacle 2 sont petits devant les câbles du faisceau de câblage 20 de l'atterrisseur 1, il est alors relativement aisé de placer les câbles du détecteur d'obstacle 2 sous les anneaux de fixation 22 et de les maintenir en position à l'aide desdits anneaux 22.

Ce mode de fixation présente l'avantage d'utiliser des moyens de fixation déjà présents sur l'atterrisseur 1 et d'être peu encombrant. Par ailleurs, il permet de mettre à niveau tout atterrisseur 1 déjà réalisé et dépourvu de détecteur d'obstacle 2 de manière simple et rapide.

Le détecteur d'obstacle 2 est de préférence choisi de manière à présenter un champ de détection F optimal pour une faible dimension, afin d'obtenir de bonnes performances en matière de détection et de permettre son logement dans la case de l'atterrisseur 1 lorsque celui-ci est dans sa configuration rétractée.

De préférence, le détecteur d'obstacle 2 est choisi de manière à présenter un champ de détection F capable de couvrir une zone inférieure et une zone arrière de l'aéronef 5. Par exemple, l'ouverture du champ de détection peut présenter un angle α de surveillance horizontale compris entre 30° et 180°, et une profondeur comprise entre environ 0 mètre et 250 mètres. Un tel détecteur 2 est alors capable de détecter de manière suffisamment précise des obstacles dans l'environnement d'un aéronef 5, et ce même si l'aéronef 5 circule sur le sol à une vitesse élevée. Par ailleurs, la technologie actuelle permet de réaliser des détecteurs d'obstacle 2 présentant de telles performances avec un faible encombrement.

Afin d'optimiser la détection des obstacles, notamment lors de manoeuvres oeuvres arrière, le détecteur d'obstacle 2 peut être orienté vers une zone arrière de l'atterrisseur 1, c'est-à-dire une zone de l'atterrisseur 1 destinée à venir en regard de l'empennage de l'aéronef 5 lorsque l'atterrisseur 1 est en position déployée. La position et l'orientation du détecteur d'obstacle 2 peut notamment être choisie en fonction de sa précision de détection et de son champ de détection F, ainsi que de la géométrie de l'atterrisseur 1 et de sa case d'atterrissage (place disponible dans la case, cinématique de sortie et de rétractation, etc.).

Dans une forme de réalisation, le détecteur d'obstacle 2 peut par exemple être fixé dans une partie latérale de l'atterrisseur 1, les moyens de détection du détecteur étant orienté vers l'arrière de celui-ci. Cette position du détecteur d'obstacle 2 présente l'avantage de ne pas gêner l'atterrisseur 1 lorsque celui-ci est en configuration rétractée dans la case, le détecteur d'obstacle 2 venant se positionner dans un espace inoccupé préexistant de la case. De plus, cette position du détecteur d'obstacle 2 ne gêne pas la cinématique de rétractation ou de sortie de l'atterrisseur 1.

Le détecteur d'obstacle 2 peut notamment être fixé en partie interne de l'atterrisseur 1, c'est-à-dire du côté de la contrefiche 18. De la sorte, lorsque l'atterrisseur 1 est en configuration rétractée, le détecteur d'obstacle 2 est confiné dans la case de l'atterrisseur 1, où il est protégé de l'extérieur.

A titre de comparaison, lorsque le détecteur d'obstacle est fixé en partie externe de l'atterrisseur 1, selon la configuration de l'atterrisseur 1 et de sa case, il est possible que le détecteur 2 se trouve exposé à l'environnement externe de la case de l'atterrisseur 1 qu'il soit plaqué contre la trappe de la case de l'atterrisseur 1.

Par exemple, dans le cas d'un atterrisseur principal rétractable d'un avion du type Airbus A320, la géométrie de l'atterrisseur et de sa case sont telles qu'il peut être avantageux de fixer le détecteur d'obstacle 2 en partie interne de l'atterrisseur 1, du côté de sa contrefiche, afin de garantir sa protection par la case de l'atterrisseur 1 en configuration rétractée. Par ailleurs, dans le cas de l'atterrisseur principal de l'Airbus A320, il est possible de loger un ou plusieurs détecteurs présentant un encombrement de l'ordre de 100*120*122 mm.

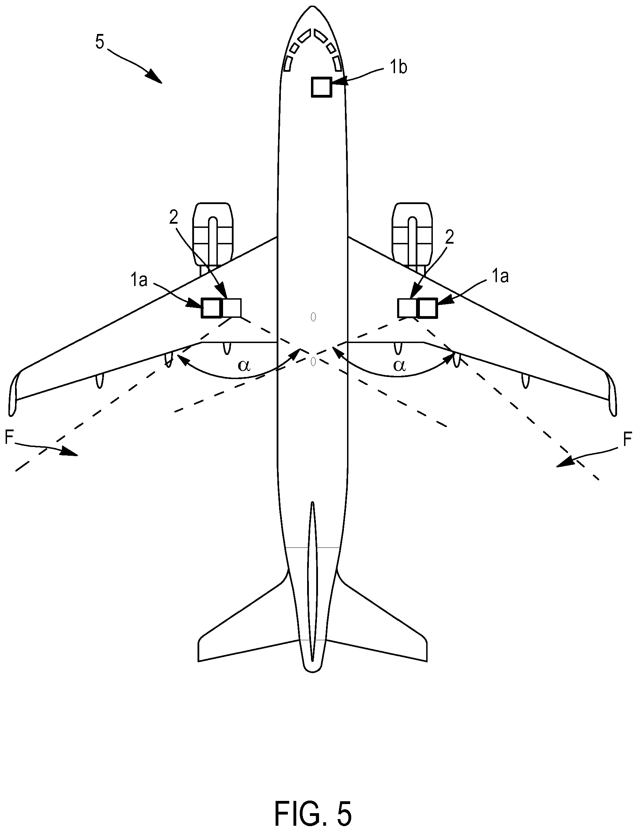

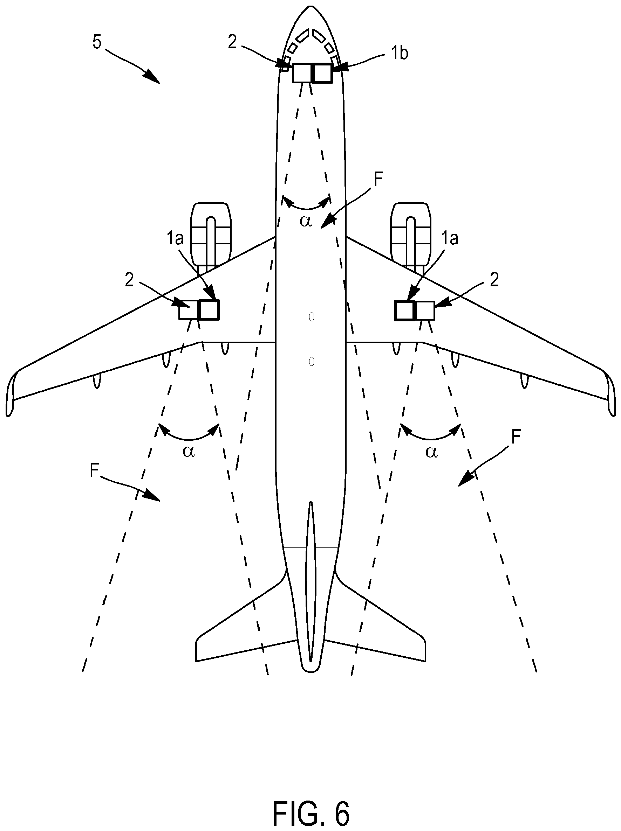

Les figures 5 et 6 illustrent des exemples de positionnement de détecteurs d'obstacle 2 sur un exemple d'aéronef 5 comprenant deux atterrisseurs principaux 1a fixés au niveau de ses ailes et un atterrisseur avant 1b fixé sous le nez de l'aéronef. On comprendra que l'invention n'est pas limitée à ce type d'aéronefs, et peut aussi bien s'appliquer à des aéronefs 5 comprenant un nombre différent d'atterrisseurs 1. La position et l'orientation des détecteurs d'obstacle 2 sont alors adaptées en fonction du type d'aéronef 5 et du nombre d'atterrisseurs.

Sur la figure 5, les détecteurs d'obstacles 2 sont fixés dans une partie latérale interne des atterrisseurs principaux 1a, c'est-à-dire vers l'intérieur de l'aéronef 5, et sont orientés vers l'arrière de l'aéronef 5. L'atterrisseur avant 1b ne comprend ici pas de détecteur d'obstacle 2. Grâce à cette position et à cette orientation, non seulement les détecteurs d'obstacle 2 peuvent être logés dans un espace libre dans la case de leur atterrisseur respectif 1a tout en respectant la cinématique de l'atterrisseur 1a lors de sa sortie ou de sa rétractation, mais en outre le champ de détection F des détecteurs 2 permet de couvrir une partir importante de la zone s'étendant sous l'aéronef 5 et derrière celui-ci. Par ailleurs, cette position des détecteurs d'obstacle permet d'obtenir un recouvrement important de leur champ de détection F respectif dans la zone sous-jacente à l'aéronef 5.

Sur la figure 6, les détecteurs d'obstacles 2 sont fixés dans une partie latérale externe des atterrisseurs principaux 1a, c'est-à-dire vers l'extérieur de l'aéronef 5 et sont orientés vers l'arrière de l'aéronef 5 afin de couvrir la zone arrière et la zone latérale de l'aéronef 5. Des détecteurs d'obstacle 2 sont également fixés sur l'atterrisseur avant 1b, ici en partie latérale. En variante, on comprendra que les détecteurs d'obstacle 2 de l'atterrisseur avant 1b pourraient aussi être orientés vers l'avant de l'aéronef 5. De manière analogue à l'exemple de la figure 5, cette position et cette orientation des détecteurs d'obstacle 2 permet de loger les détecteurs dans un espace libre de la case de leur atterrisseur respectif tout en respectant la cinématique de l'atterrisseur lors de sa sortie ou de sa rétractation. Par ailleurs, le champ de détection F des détecteurs 2 permet de couvrir une partie importante de la zone s'étendant sous l'aéronef 5 et derrière celui-ci, avec un recouvrement important des champs de détection F des détecteurs 2 dans la zone sous-jacente à l'aéronef 5.

Le détecteur d'obstacle 2 peut être protégé de son environnement (intempérie, vent, etc.) à l'aide d'un bouclier de protection, par exemple par un capot de protection ou par le support 3 du détecteur 2.

L'atterrisseur 1 peut comprendre plusieurs détecteurs d'obstacle 2, par exemple deux détecteurs d'obstacle 2, afin d'améliorer la détection des obstacles, de réduire le bruit pouvant être causé par les conditions externes (notamment par les conditions météorologiques) et de pallier tout dysfonctionnement éventuel d'un des détecteurs d'obstacle 2.

Par exemple, l'atterrisseur 1 peut comprendre au moins un, de préférence au moins deux détecteurs d'obstacle 2 choisis parmi le groupe suivant : un détecteur de proximité (infrarouge, hyperfréquence, ultrasons, etc.), une ou plusieurs caméras (infrarouge ou visible - vision artificielle simple ou stéréovision, etc.), un télémètre (télémètre à ultrasons, radar ou télémètre laser), etc.

Dans une forme de réalisation, l'atterrisseur 1 peut comprendre un actionneur (non visible sur les figures) configuré pour mettre le détecteur d'obstacle 2 en rotation autour de l'axe longitudinal X du caisson 10. La mise en oeuvre d'un tel actionneur permet ainsi au détecteur d'agrandir l'angle α de son champ de détection F en effectuant un balayage de la zone environnante. Le détecteur 2 peut ainsi détecter ainsi des obstacles sur 360° autour de l'axe longitudinal X du caisson 10, et ce même si le rayon α initial du champ de détection F du détecteur d'obstacle 2 est inférieur à 360°.

L'actionneur permet donc de réduire les dimensions du détecteur d'obstacle 2, et donc son encombrement, en réduisant les performances requises pour le détecteur 2.

On comprendra que, dans le cas où le détecteur d'obstacle 2 est fixé sur un support 3, l'actionneur peut positionner (ou orienter) le détecteur d'obstacle 2 par l'intermédiaire de son support 3.

Lorsque l'atterrisseur 1 comprend plusieurs détecteurs d'obstacle 2, au moins deux détecteurs d'obstacle 2 sont fixés ensemble de manière à former une pièce monobloc. Dans une forme de réalisation, l'ensemble des détecteurs d'obstacle 2 sont fixés ensemble pour former une pièce monobloc.

Par exemple, tout ou partie des détecteurs d'obstacle 2 peut être fixée sur le support 3.

Ainsi, lorsque l'atterrisseur 1 est muni d'un actionneur et que les détecteurs sont fixés sur un support 3 commun, la mise en rotation du support 3 par l'actionneur autour de l'axe longitudinal X entraine le déplacement de l'ensemble des détecteurs d'obstacle 2 fixés sur ce support 3.

## Revendications

1. Atterrisseur (1) d'un aéronef (5), comprenant :
- un caisson (10), présentant une direction principale s'étendant selon un axe longitudinal (X), ledit caisson (10) comprenant une première extrémité (10a) configurée pour être montée sur l'aéronef (5) et une deuxième extrémité (10b) opposée à la première extrémité (10a),
- une tige (14), montée à coulissement sur la deuxième extrémité (10b) du caisson (10), ladite tige (14) étant mobile en translation par rapport au caisson (10) le long de l'axe longitudinal (X),
- au moins un détecteur d'obstacle (2), fixé sur l'atterrisseur (1), l'atterrisseur (1) étant **caractérisé en ce que** le détecteur d'obstacle (2) est fixé dans une zone adjacente à la deuxième extrémité (10b) du caisson (10).

2. Atterrisseur (1) selon la revendication 1, dans lequel le détecteur d'obstacle (2) est fixé sur le caisson (10).

3. Atterrisseur (1) selon l'une des revendications 1 ou 2, comprenant en outre une contrefiche (18), ladite contrefiche (18) comprenant une première extrémité (18b) configurée pour être montée sur l'aéronef (5) et une deuxième extrémité (18a) configurée pour être connectée au caisson (10) dans une zone adjacente à la deuxième extrémité (10b) dudit caisson (10), et dans lequel le détecteur d'obstacle (2) est fixé dans une zone adjacente à la contrefiche (18).

4. Atterrisseur (1) selon la revendication 3, dans lequel le détecteur est fixé sur le caisson (10), entre la deuxième extrémité (18a) de la contrefiche (18) et la première extrémité (10a) du caisson (10).

5. Atterrisseur (1) selon l'une des revendications 1 à 4, dans lequel le détecteur d'obstacle (2) est fixé de manière à être orienté vers une zone arrière de l'atterrisseur (1), ladite zone arrière étant destinée à être orientée vers une zone arrière d'un aéronef (5).

6. Atterrisseur (1) selon l'une des revendications 1 à 5, dans lequel le détecteur d'obstacle (2) est fixé dans une zone latérale de l'atterrisseur, de préférence en partie interne de l'atterrisseur (1).

7. Atterrisseur (1) selon l'une des revendications 1 à 6, comprenant au moins deux détecteurs d'obstacle (2).

8. Atterrisseur (1) selon la revendication 7, dans lequel les détecteurs d'obstacle (2) sont fixés ensemble de manière à former une pièce monobloc.

9. Atterrisseur (1) selon l'une des revendications 1 à 8, dans lequel le détecteur d'obstacle (2) comprend au moins un, de préférence au moins deux détecteurs d'obstacle (2) choisis parmi le groupe suivant : détecteur de proximité infrarouge, détecteur de proximité hyperfréquence, détecteur de proximité ultrasons, une ou plusieurs caméras infrarouge ou visible, un télémètre à ultrasons, un télémètre radar ou un télémètre laser.

10. Atterrisseur (1) selon l'une des revendications 1 à 9, comprenant en outre un actionneur configuré pour mettre en rotation le détecteur d'obstacle (2) autour de l'axe longitudinal (X) du caisson (10).

11. Atterrisseur (1) selon l'une des revendications 1 à 10, comprenant en outre un faisceau de câblage (20) configuré pour contrôler une transmission de la puissance dans l'atterrisseur, ledit faisceau de câblage (2) étant fixé sur l'atterrisseur (1) à l'aide d'anneaux de fixation (22) élastiquement déformables, et dans lequel le détecteur d'obstacle (2) comprend des câbles fixés à l'atterrisseur (1) à l'aide des anneaux de fixation (22) du faisceau de câblage (20).

12. Atterrisseur (1) selon l'une des revendications 1 à 11, dans lequel le détecteur d'obstacle (2) comprend un champ de détection (F) présentant une ouverture et une profondeur configurés pour couvrir une zone inférieure de l'aéronef (5) et une zone arrière de l'aéronef (5).

13. Atterrisseur (1) selon la revendication 12, dans lequel l'ouverture du champ de détection (F) présente un angle (α) de surveillance horizontale compris entre 0° et 180°, et la profondeur du champ de détection (F) est comprise entre environ 0 mètre et 250 mètres.

14. Atterrisseur (1) selon l'une des revendications 1 à 13, comprenant un atterrisseur principal ou un atterrisseur avant de l'aéronef (5).

15. Atterrisseur (1) selon l'une des revendications 1 à 14, **caractérisé en ce qu'**il est rétractable.

16. Aéronef (5), comprenant un atterrisseur (1) selon l'une des revendications 1 à 15.

## Patentansprüche

1. Fahrwerk (1) eines Luftfahrzeugs (5), umfassend:
- einen Kasten (10), aufweisend eine Hauptrichtung, die sich gemäß einer Längsachse (X) erstreckt, wobei der Kasten (10) ein erstes Ende (10a), das konfiguriert ist, um an dem Luftfahrzeug (5) angebracht zu sein, und ein dem ersten Ende (10a) gegenüberliegendes zweites Ende (10b) umfasst,
- eine Stange (14), die gleitend auf dem zweiten Ende (10b) des Kastens (10) angebracht ist, wobei die Stange (14) in Bezug zum Kasten (10) entlang der Längsachse (X) verschiebend beweglich ist,
- mindestens einen Hindernisdetektor (2), der am Fahrwerk (1) befestigt ist, wobei das Fahrwerk (1) **dadurch gekennzeichnet ist, dass** der Hindernisdetektor (2) in einem zum zweiten Ende (10b) des Kastens (10) benachbarten Bereich befestigt ist.

2. Fahrwerk (1) nach Anspruch 1, wobei der Hindernisdetektor (2) auf dem Kasten (10) befestigt ist.

3. Fahrwerk (1) nach einem der Ansprüche 1 oder 2, umfassend ferner eine Gegenstrebe (18), wobei die Gegenstrebe (18) ein erstes Ende (18b), das konfiguriert ist, um auf dem Luftfahrzeug (5) angebracht zu sein, und ein zweites Ende (18a), das konfiguriert ist, um mit dem Kasten (10) in einem zum zweiten Ende (10b) des Kastens (10) benachbarten Bereich verbunden zu sein, umfasst, und wobei der Hindernisdetektor (2) in einem zur Gegenstrebe (18) benachbarten Bereich befestigt ist.

4. Fahrwerk (1) nach Anspruch 3, wobei der Detektor auf dem Kasten (10) zwischen dem zweiten Ende (18a) der Gegenstrebe (18) und dem ersten Ende (10a) des Kastens (10) befestigt ist.

5. Fahrwerk (1) nach einem der Ansprüche 1 bis 4, wobei der Hindernisdetektor (2) derart befestigt ist, dass er zu einem hinteren Bereich des Fahrwerks (1) zeigt, wobei der hintere Bereich bestimmt ist, zu einem hinteren Bereich eines Luftfahrzeugs (5) zu zeigen.

6. Fahrwerk (1) nach einem der Ansprüche 1 bis 5, wobei der Hindernisdetektor (2) in einem seitlichen Bereich des Fahrwerks, vorzugsweise im Innenteil des Fahrwerks (1), befestigt ist.

7. Fahrwerk (1) nach einem der Ansprüche 1 bis 6, umfassend mindestens zwei Hindernisdetektoren (2).

8. Fahrwerk (1) nach Anspruch 7, wobei die Hindernisdetektoren (2) gemeinsam derart befestigt sind, dass sie ein Teil aus einem Stück bilden.

9. Fahrwerk (1) nach einem der Ansprüche 1 bis 8, wobei der Hindernisdetektor (2) mindestens einen, vorzugsweise mindestens zwei Hindernisdetektoren (2), umfasst, die aus der folgenden Gruppe ausgewählt sind: Infrarot-Annäherungsdetektor, Hyperfrequenz-Annäherungsdetektor, Ultraschall-Annäherungsdetektor, einer oder mehreren Infrarot- oder im sichtbaren Licht arbeiteten Kameras, einem Ultraschall-Entfernungsmesser, einem Radar-Entfernungsmesser oder einem Laser-Entfernungsmesser.

10. Fahrwerk (1) nach einem der Ansprüche 1 bis 9, umfassend ferner einen Aktuator, der konfiguriert ist, um den Hindernisdetektor (2) um die Längsachse (X) des Kastens (10) in Rotation zu versetzen.

11. Fahrwerk (1) nach einem der Ansprüche 1 bis 10, umfassend ferner einen Kabelbaum (20), der konfiguriert ist, um eine Übertragung von Leistung im Fahrwerk zu steuern, wobei der Kabelbaum (2) auf dem Fahrwerk (1) mit Hilfe von elastisch verformbaren Befestigungsringen (22) befestigt ist, und wobei der Hindernisdetektor (2) mit Hilfe der Befestigungsringe (22) des Kabelbaums (20) am Fahrwerk (1) befestigte Kabel umfasst.

12. Fahrwerk (1) nach einem der Ansprüche 1 bis 11, wobei der Hindernisdetektor (2) ein Detektionsfeld (F) umfasst, das eine Öffnung und eine Tiefe aufweist, die konfiguriert sind, um einen unteren Bereich des Luftfahrzeugs (5) und einen hinteren Bereich des Luftfahrzeugs (5) abzudecken.

13. Fahrwerk (1) nach Anspruch 12, wobei die Öffnung des Detektionsfelds (F) einen Winkel (α) für die horizontale Überwachung zwischen 0° und 180° inklusive umfasst und die Tiefe des Detektionsfelds (F) zwischen zirka 0 Meter und 250 Meter inklusive beträgt.

14. Fahrwerk (1) nach einem der Ansprüche 1 bis 13, umfassend ein Hauptfahrwerk oder ein vorderes Fahrwerk des Luftfahrzeugs (5).

15. Fahrwerk (1) nach einem der Ansprüche 1 bis 14, **dadurch gekennzeichnet, dass** es einfahrbar ist.

16. Luftfahrzeug (5), umfassend ein Fahrwerk (1) nach einem der Ansprüche 1 bis 15.

## Claims

1. A landing gear (1) for an aircraft (5) comprising:
- a casing (10), having a main direction extending along a longitudinal axis (X), said casing (10) comprising a first end (10a) configured to be mounted on the aircraft (5), and a second end (10b) opposite to the first end (10a),
- a rod (14), slidably mounted on the second end (10b) of the casing (10), said rod (14) being movable in translation with respect to the casing (10) along the longitudinal axis (X),
- at least one obstacle detector (2) attached to the landing gear (1). the landing gear (1) being **characterized in that** the obstacle detector (2) is attached in an area adjacent to the second end (10b) of the casing (10).

2. The landing gear (1) according to claim 1, wherein the obstacle detector (2) is attached to the casing (10).

3. The landing gear (1) according to one of claims 1 or 2, further comprising a brace-strut (18), said brace-strut (18) comprising a first end (18b) configured to be mounted on the aircraft (5) and a second end (18a) configured to be connected to the casing (10) in an area adjacent to the second end (10b) of said casing (10), and wherein the obstacle detector (2) is attached in an area adjacent to the brace-strut (18).

4. The landing gear (1) according to claim 3, wherein the detector is attached to the casing (1), between the second end (18a) of the brace-strut (18) and the first end (10a) of the casing (10).

5. The landing gear (1) according to one of claims 1 to 4, wherein the obstacle detector (2) is attached so as to be oriented toward a rear area of the landing gear (1), said rear area being intended to be oriented toward a rear area of an aircraft (5).

6. The landing gear (1) according to one of claims 1 to 5, wherein the obstacle detector (2) is attached in a lateral area of the landing gear, preferably in the internal portion of the landing gear (1).

7. The landing gear (1) according to one of claims 1 to 6, comprising at least two obstacle detectors (2).

8. The landing gear (5) according to claim 7, wherein the obstacle detectors (2) are attached together so as to form a single part.

9. The landing gear (1) according to one of claims 1 to 8, wherein the obstacle detector (2) comprises at least one, preferably at least two obstacle detectors (2) selected from the following group: infrared proximity detector, microwave proximity detector, ultrasonic proximity detector, one or more infrared or visible cameras, an ultrasonic range finder, a radar range finder or a laser range finder.

10. The landing gear (1) according to one of claims 1 to 9, further comprising an actuator configured to rotate the obstacle detector (2) around the longitudinal axis (X) of the casing (10).

11. The landing gear (1) according to one of claims 1 to 10, further comprising a wiring harness (20) configured to control transmission of power within the landing gear, said wiring harness (20) being attached to the landing gear (1) using elastically deformable attachment rings (22), and wherein the obstacle detector (2) comprises cables attached to the landing gear (1) using the attachment rings (22) of the wiring harness (20).

12. The landing gear (1) according to one of claims 1 to 11, wherein the obstacle detector (2) comprises a detection field (F) having an aperture and a depth configured to cover a lower area of the aircraft (5) and a rear area of the aircraft (5).

13. The landing gear (1) according to claim 12, wherein the aperture of the detection field (F) has a horizontal viewing angle (α) comprised between 0° and 180°, and the depth of the detection field (F) is comprised between approximately 0 meter and 250 meters.

14. The landing gear (1) according to one of claims 1 to 13, comprising a main landing gear or a nose landing gear of the aircraft (5).

15. The landing gear (1) according to one of claims 1 to 14, **characterized in that** it is retractable.

16. An aircraft (5), comprising a landing gear (1) according to one of claims 1 to 15.
